# EUROPÄISCHE PATENTSCHRIFT

(11) **EP 0 811 520 B1**
(45) Veröffentlichungstag und Bekanntmachung des Hinweises auf die Patenterteilung: **10.05.2000**
(21) Anmeldenummer: 97103702.3
(22) Anmeldetag: 06.03.1997
(51) Int. Cl.: B60K 15/05

(54) **Im Spritzgiessverfahren gefertigter Verschlussdeckel aus Kunststoff**
Plastic inlet cover made by injection moulding
Bouchon de fermeture en plastique moulé par injection

(30) Priorität: 05.06.1996 DE 19622528
(43) Veröffentlichungstag der Anmeldung: 10.12.1997
(73) Patentinhaber: Mannesmann VDO AG, 60326 Frankfurt (DE)
(72) Erfinder: Fröhlich, Winfried, 65520 Bad Camberg (DE); Dasbach, Burkhard, 65817 Eppstein (DE)
(74) Vertreter: Rassler, Andrea, Dipl.-Phys.

(56) Entgegenhaltungen:
- DE-A- 4 123 367
- DE-A- 4 433 301
- US-A- 5 472 746
- US-A- 5 476 121

## Beschreibung

Die Erfindung betrifft einen im Spritzgießverfahren gefertigten Verschlußdeckel aus Kunststoff für einen Kraftstoffbehälter eines Kraftfahrzeuges mit zumindest einer durch ihn hindurchführenden Kraftstoffleitung und mit ebenfalls durch ihn hindurchführenden Kontaktstiften.

Ein solcher Verschlußdeckel (z.B. bekannt aus DE-A-4 123 367) wird bei heutigen Kraftfahrzeugen vielfach eingesetzt, wenn beispielsweise eine elektrische Kraftstoffpumpe innerhalb des Kraftstoffbehälters angeordnet ist und ist damit bekannt. Hierbei werden die aus dem Kraftstoffbehälter herausführenden Kraftstoffleitungen zweckmäßigerweise durch den Verschlußdeckel geführt. Zu der Kraftstoffpumpe führende elektrische Leitungen werden mit den im Verschlußdeckel eingearbeiteten Kontaktstiften kontaktiert. Als Material für den Verschlußdeckel hat sich Kunststoff als besonders vorteilhaft erwiesen, da er leicht im Spritzgießverfahren zu verarbeiten und deshalb in einer Serienfertigung sehr preiswert ist. Die Kontaktstifte lassen sich in einem solchen Kunststoff einfach eindrücken oder umspritzen.

Weiterhin hat ein im Kunststoffspritzgießverfahren gefertigter Verschlußdeckel eine hohe Festigkeit gegenüber Stoßbelastung und ein sehr gutes Schwingungsverhalten. Ein solcher Verschlußdeckel bietet eine hohe Schalldämmung und einen guten Schutz gegen ein Auslaufen des Kraftstoffbehälters, beispielsweise bei einem Unfall.

Nachteilig bei dem im Kunststoffspritzgießverfahren hergestellten Verschlußdeckel ist dessen niedrige mechanische Festigkeit bei hohen Temperaturen. Insbesondere bei heutigen Kraftfahrzeugen mit Dieselmotor herrschen in den Kraftstoffleitungen Temperaturen bis zu 120°C und Drücke bis zu 4 bar, so daß die mechanische Festigkeit des Verschlußdeckels im Bereich der Kraftstoffleitung überschritten wird. Man könnte daran denken, den Verschlußdeckel aus einem Material mit einer höheren Temperaturbeständigkeit zu fertigen. Solche Verschlußdeckel wären dann jedoch aufwendig zu fertigen oder zu spröde, um ein Auslaufen des Kraftstoffbehälters bei einem Unfall zu verhindern. Weiterhin ist kein wärmebeständiger Kunststoff bekannt, bei dem sich die Kontaktstifte ähnlich leicht einarbeiten lassen wie bei dem bekannten, im Spritzgießverfahren zu verarbeitenden Kunststoff. Bei einem Verschlußdeckel aus einem metallischen Werkstoff entsteht zudem das Problem der Isolierung der Kontaktstifte.

Der Erfindung liegt das Problem zugrunde, einen im Kunststoffspritzgießverfahren gefertigten Verschlußdeckel der eingangs genannten Art so zu gestalten, daß er auch bei hohen Temperaturen und Drücken in der Kraftstoffleitung eine ausreichende mechanische Festigkeit besitzt und möglichst einfach zu fertigen ist.

Dieses Problem wird erfindungsgemäß dadurch gelöst, daß der Verschlußdeckel im Bereich der Kraftstoffleitung einen Einsatz aus einem temperaturbeständigen Material mit einer niedrigen Wärmeleitfähigkeit hat.

Durch diese Gestaltung kann der Verschlußdeckel wie der bekannte Verschlußdeckel im Spritzgießverfahren aus Kunststoff hergestellt werden, der bei niedrigen Temperaturen eine hohe mechanische Festigkeit hat. Die Einsätze des Verschlußdeckels im Bereich der Kraftstoffleitungen gewährleisten, daß die hohen Temperaturen in der Kraftstoffleitung nicht auf die übrigen Bereiche des Verschlußdeckels übertragen werden. Hierdurch hat der Verschlußdeckel im Bereich der Kraftstoffleitung eine hohe mechanische Festigkeit bei hohen Temperaturen und in seinen übrigen Bereichen die erforderliche Stoßfestigkeit.

Häufig führen durch den Verschlußdeckel mehrere Kraftstoffleitungen hindurch. Diese Kraftstoffleitungen können beispielsweise eng beieinander in dem Verschlußdeckel angeordnet sein und einen gemeinsamen Einsatz haben. Der Verschlußdeckel ist jedoch gemäß einer vorteilhaften Weiterbildung der Erfindung besonders schwingungsdämpfend, wenn er im Bereich der Kraftstoffleitungen jeweils einen separaten Einsatz hat.

Die Einsätze haben eine hohe mechanische Stabilität, wenn sie gemäß einer anderen vorteilhaften Weiterbildung der Erfindung aus einem von einem Kunststoff mit niedriger Wärmeleitfähigkeit umspritzten Metallrohr bestehen.

Die Einsätze haben wie der Kunststoff des Verschlußdekkels eine hohe Beständigkeit gegenüber dem Kraftstoff und sind gleichzeitig einfach zu fertigen, wenn sie gemäß einer vorteilhaften Weiterbildung der Erfindung aus Polyacetat gefertigt sind.

Die aus Polyacetat gefertigten Einsätze haben bei hohen Temperaturen eine besonders hohe Festigkeit, wenn sie Einlagen aus Glasfasern haben.

Die Einsätze haben bei hohen und bei niedrigen -Temperaturen eine gleichermaßen hohe Festigkeit, wenn der Glasfaseranteil im Polyacetat zwischen 10 % und 30 % beträgt. Weiterhin zeichnen sich die mit diesem Material gefertigten Einsätze durch eine besonders hohe Schlagzähigkeit aus.

Die Einsätze weisen auch bei besonders hohen Temperaturen eine hohe Formbeständigkeit bei einer niedrigen Temperaturleitfähigkeit auf, wenn sie gemäß einer anderen vorteilhaften Weiterbildung der Erfindung aus Polyphenylensulfid bestehen.

Die mechanischen Eigenschaften der Einsätze lassen sich bei hohen Temperaturen weiter verbessern, wenn sie aus Polyphenylensulfid mit einem Mineralanteil und/oder einem Glasfaseranteil bestehen.

Die Einsätze lassen sich einfach in dem Verschlußdeckel befestigen, wenn sie gemäß einer anderen vorteilhaften Weiterbildung der Erfindung in den Verschlußdeckel eingespritzt sind.

Da die Einsätze aus Polyacetat oder aus Polyphenylensulfid im Vergleich zu dem Verschlußdeckel relativ spröde sind, besteht die Gefahr, daß sie bei einem Unfall abbrechen. Diese Gefahr läßt sich gemäß einer anderen vorteilhaften Weiterbildung einfach dadurch beseitigen, daß der äußere Bereich der Einsätze von dem Kunststoff des Verschlußdeckels vollständig umschlossen ist.

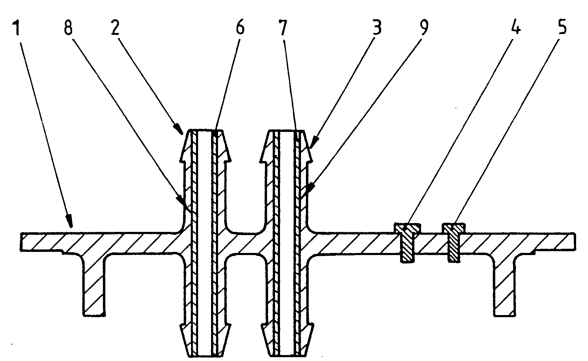

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in einer einzigen Figur eine Schnittdarstellung eines erfindungsgemäßen Verschlußdekkels 1 mit jeweils zwei durch ihn hindurchführenden Kraftstoffleitungen 2, 3 und Kontaktstiften 4, 5. Die Kraftstoffleitungen 2, 3 haben jeweils einen Einsatz 6, 7 aus einem Material mit einer hohen Temperaturfestigkeit und einer niedrigen Wärmeleitfähigkeit. Der äußere Bereich 8, 9 der Einsätze 6, 7 ist von dem Kunststoff des Verschlußdeckels 1 vollständig umspritzt, so daß selbst bei einem Bruch der Einsätze 6, 7 die Dichtheit der Kraftstoffleitungen 2, 3 gewährleistet ist. Die Kontaktstifte 4, 5 bestehen aus Metall und sind in den Verschlußdeckel 1 eingedrückt oder eingespritzt. An den Kontaktstiften 4, 5, lassen sich nicht dargestellte elektrische Leitungen anlöten.

## Patentansprüche

1. Im Spritzgießverfahren gefertigter Verschlußdeckel (1) aus Kunststoff für einen Kraftstoffbehälter eines Kraftfahrzeuges mit zumindest einer durch ihn hindurchführenden Kraftstoffleitung (2, 3) und ebenfalls durch ihn hindurchführenden Kontaktstiften (4,5), **dadurch gekennzeichnet**, daß im Bereich des Verschlußdeckels (1) innerhalb der Kraftstoffleitung (2, 3) ein Einsatz (6, 7) aus einem temperaturbeständigen Material mit einer niedrigen Wärmeleitfähigkeit enthalten ist.

2. Verschlußdeckel mit mehreren durch ihn hindurchführenden Kraftstoffleitungen nach Anspruch 1, **dadurch gekennzeichnet**, daß der Verschlußdeckel (1) im Bereich jeder der Kraftstoffleitungen (2, 3) einen separaten Einsatz (6, 7) hat.

3. Verschlußdeckel nach Anspruch 1 oder 2, **dadurch gekennzeichnet**, daß die Einsätze (6, 7) aus einem von einem Kunststoff mit niedriger Wärmeleitfähigkeit umspritzten Metallrohr bestehen.

4. Verschlußdeckel nach Anspruch 1 oder 2, **dadurch gekennzeichnet**, daß die Einsätze (6, 7) aus Polyacetat gefertigt sind.

5. Verschlußdeckel nach Anspruch 4, **dadurch gekennzeichnet**, daß die Einsätze (6, 7) Einlagen aus Glasfasern haben.

6. Verschlußdeckel nach Anspruch 5, **dadurch gekennzeichnet**, daß der Glasfaseranteil im Polyacetat zwischen 10 % - 30 % beträgt.

7. Verschlußdeckel nach Anspruch 1 oder 2, **dadurch gekennzeichnet**, daß die Einsätze (6, 7) aus Polyphenylensulfid bestehen.

8. Verschlußdeckel nach Anspruch 7, **dadurch gekennzeichnet**, daß die Einsätze (6, 7) aus Polyphenylensulfid mit einem Mineralanteil und/oder Glasfaseranteil bestehen.

9. Verschlußdeckel nach zumindest einem der vorhergehenden Ansprüche, **dadurch gekennzeichnet**, daß die Einsätze (6, 7) in den Verschlußdeckel (1) eingespritzt sind.

10. Verschlußdeckel nach zumindest einem der vorhergehenden Ansprüche, **dadurch gekennzeichnet**, daß der äußere Bereich der Einsätze (6, 7) von dem Kunststoff des Verschlußdeckels (1) vollständig umschlossen ist.

## Claims

1. Plastic cap (1) produced by the injection-moulding process for a fuel tank of a motor vehicle, having at least one fuel line (2, 3) passing through it and contact pins (4, 5) likewise passing through it, characterized in that an insert (6, 7) made from a temperature-resistant material with a low thermal conductivity is contained within the fuel line (2, 3) in the region of the cap (1).

2. Cap having a plurality of fuel lines passing through it according to Claim 1, characterized in that the cap (1) has a separate insert (6, 7) in the region of each of the fuel lines (2, 3).

3. Cap according to Claim 1 or 2, characterized in that the inserts (6, 7) comprise a metal tube encapsulated in a plastic with low thermal conductivity.

4. Cap according to Claim 1 or 2, characterized in that the inserts (6, 7) are produced from polyacetate.

5. Cap according to Claim 4, characterized in that the inserts (6, 7) have inclusions of glass fibres.

6. Cap according to Claim 5, characterized in that the glass fibre fraction in the polyacetate is between 10% and 30%.

7. Cap according to Claim 1 or 2, characterized in that the inserts (6, 7) consist of polyphenylene sulphide.

8. Cap according to Claim 7, characterized in that the inserts (6, 7) consist of polyphenylene sulphide with a mineral fraction and/or glass fibre fraction.

9. Cap according to at least one of the preceding claims, characterized in that the inserts (6, 7) are injection-moulded into the cap (1).

10. Cap according to at least one of the preceding claims, characterized in that the outer region of the inserts (6, 7) is completely enclosed by the plastic of the cap (1).

## Revendications

1. Bouchon de fermeture (1) en plastique moulé par injection pour un réservoir de carburant d'un véhicule à moteur comprenant au moins une conduite de carburant (2, 3) le traversant et également des broches de contact (4, 5) le traversant, **caractérisé en ce que** dans la zone du bouchon de fermeture (1), un insert (6, 7) en matériau résistant à la température et de faible conductivité thermique est prévu à l'intérieur de la conduite de carburant (2, 3).

2. Bouchon de fermeture comprenant plusieurs conduites de carburant le traversant selon la revendication 1, **caractérisé en ce que** le bouchon de fermeture (1) a un insert séparé (6, 7) dans la zone de chacune des conduites de carburant (2, 3).

3. Bouchon de fermeture selon la revendication 1 ou 2, **caractérisé en ce que** les inserts (6, 7) se compose d'un tube métallique couvert par extrusion avec un plastique de faible conductivité thermique.

4. Bouchon de fermeture selon la revendication 1 ou 2, **caractérisé en ce que** les inserts (6, 7) sont fabriqués en polyacétate.

5. Bouchon de fermeture selon la revendication 4, **caractérisé en ce que** les inserts (6, 7) ont des doublures en fibre de verre.

6. Bouchon de fermeture selon la revendication 5, **caractérisé en ce que** la proportion de fibre de verre dans le polyacétate est comprise entre 10% et 30%.

7. Bouchon de fermeture selon la revendication 1 ou 2, **caractérisé en ce que** les inserts (6, 7) se composent de poly(sulfure de phénylène).

8. Bouchon de fermeture selon la revendication 7, **caractérisé en ce que** les inserts (6, 7) se composent de poly(sulfure de phénylène) avec une proportion minérale et/ou une proportion de fibre de verre.

9. Bouchon de fermeture selon au moins l'une des revendications précédentes, **caractérisé en ce que** les inserts (6, 7) sont moulés par injection dans le couvercle de fermeture (1).

10. Bouchon de fermeture selon au moins l'une des revendications précédentes, **caractérisé en ce que** la zone externe des inserts (6, 7) est entourée complètement par le plastique du couvercle de fermeture (1) .
